Europäisches Patentamt

European Patent Office

Office européen des brevets

(19)

(11) Veröffentlichungsnummer: **0 007 125**
**A1**

(12) **EUROPÄISCHE PATENTANMELDUNG**

(21) Anmeldenummer: **79200339.4**

(22) Anmeldetag: **26.06.79**

(51) Int. Cl.³: **B 41 C 1/04**

(30) Priorität: **10.07.78 DE 2830189**
**25.04.79 DE 2916663**

(43) Veröffentlichungstag der Anmeldung:
**23.01.80 Patentblatt 80/2**

(84) Benannte Vertragsstaaten:
**BE CH FR GB IT NL SE**

(71) Anmelder: **Forma Glas GmbH & Co. KG**
**Schwarzstrasse 21**
**A-5020 Salzburg(AT)**

(72) Erfinder: **Füller, Hermann**

**D-8356 Riedelhütte 803(DE)**

(74) Vertreter: **Schulze Horn, Stefan, Dipl.-Ing. et al,**
**Goldstrasse 36**
**D-4400 Münster(DE)**

(54) Verfahren zur Oberflächengravur und zum Schliff von Glaskörpern und Einrichtung zur Durchführung des Verfahrens.

(57) Verfahren zur Oberflächengravur und zum Schliff von Glaskörpern, wobei auf der Oberfläche durch verschiedene Gravur- bzw. Schliffarten die hellen bzw. dunklen Felder eines Bildes oder entsprechende Vertiefungen nach einer Vorlage erzeugt werden, dadurch gekennzeichnet, daß die Vorlage optisch abgetastet wird, die Hell-Dunkel-Signale in elektrische Signale umgewandelt werden und diese auf eine Gravur- bzw. Schleifeinrichtung übertragen werden, die je nach Signal eine Gravur bzw. einen Schliffe vornimmt, die durch unterschiedliche Tiefe des Eingriffs hell oder dunkel erscheinen, und Einrichtung zur Durchführung des Verfahrens mit einem Abtastgerät zur optisch elektrischen Abtastung einer Vorlage (1) und Abgabe davon abhängiger elektrischer Signale, eine Rechner- und oder Speichereinheit (3) zur Verarbeitung der elektrischen Signale und ein Gravur- bzw. Schleifmaschine (4) zur Durchführung der Gravur bzw. des Schliffes in Abhängigkeit von den elektrischen Signalen der Rechner- und oder Speichereinheit (3).

Fig 2

EP 0 007 125 A1

Die Erfindung betrifft ein Verfahren zur Oberflächengravur und zum Schliff von Glaskörpern, wobei auf
der Oberfläche durch verschiedene Gravur- bzw. Schliffarten die hellen bzw. dunklen Felder eines Bildes oder
entsprechende Vertiefungen nach einer Vorlage erzeugt
werden, und eine Einrichtung zur Durchführung dieses
Verfahrens.

Es ist bereits seit langem bekannt, Hohl- und Flachglasoberflächen zu behandeln, d. h. zu gravieren, zu
schleifen oder zu ätzen, um auf der Oberfläche Ornamente, Bilder oder dergleichen zu schaffen.

Nachteilig ist bei den Ätzverfahren der dafür notwendige Aufwand und die Begrenzung der Gestaltungsmöglichkeiten, die darin liegt, daß die geätzte Fläche matt
wird. Das Schleifen wiederum erfordert einen hohen Aufwand an manueller Arbeit, die von spezialisierten
Fachkräften geleistet werden muß und die das Schleifen
außerordentlich kostspielig macht. Weiterhin ist es
auch nicht möglich, z. B. beliebige Bilder zu schleifen, ohne daß ein vorheriger, ebenfalls sehr kostenintensiver Arbeitsgang des Aufzeichnens vorgeschaltet
würde.

Es ist demgegenüber Aufgabe der Erfindung, ein neues
Verfahren zur Gravur bzw. zum Schliff von Glasoberflächen und eine Einrichtung zur Durchführung dieses
Verfahrens zu schaffen, die nicht nur rein maschinell

2

die Übertragung beliebiger Ornamente oder Bilder gestatten, sondern die darüber hinaus die Übertragung aller Bilder oder Vorlagen unter beliebiger Verkleinerung oder Vergrößerung auch auf gekrümmte Oberflächen erlauben.

Die Lösung gemäß Erfindung soll weiterhin wirtschaftlich und zum Einsatz in der Massenfertigung durch Automaten geeignet sein.

Diese Aufgabe wird erfindungsgemäß dadurch gelöst, daß bei dem eingangs genannten Verfahren die Vorlage optisch abgetastet wird, die Hell-Dunkel-Signale in elektrische Signale umgewandelt werden und diese auf eine Gravur- bzw. Schleifeinrichtung übertragen werden, die je nach Signal eine Gravur bzw. einen Schliff vornimmt, die durch unterschiedliche Tiefe des Eingriffs hell oder dunkel erscheinen.

Im einzelnen kann vorteilhaft so vorgegangen werden, daß die Gravur durch "Hämmern" oder "Stippen" mit Diamantspitzen unter Steuerung der Häufigkeit der Eingriffspunkte je Flächeneinheit bzw. durch Schleifen mittels Diamantschleifscheiben vorgenommen wird, wobei vorteilhaft eine Speicherung der elektrischen Signale zur wiederholten Abgabe an eine Gravurmaschine oder -einrichtung vorgenommen werden kann.

Vorteilhaft erfolgt die optische Abtastung zeilenweise und beim Vorrücken der Abtastvorrichtung um eine Zeile wird der Glaskörper um einen durch das Größenverhältnis zwischen Vorlage und Gravur bzw. Schliff bestimmten Betrag verschoben bzw. gedreht.

Eine Speicherung der elektrischen Signale ermöglicht eine wiederholte Abgabe an eine Gravur- oder Schleifmaschine.

3

Das Größenverhältnis zwischen Vorlage und Gravur bzw. Schliff kann über die Relativgeschwindigkeit zwischen Gravur- bzw. Schleifmaschine und dem Glaskörper gesteuert werden.

Die Stelle der Vorlage mit der größten Farbintensität dient vorteilhaft als Referenzwert, d. h., daß an der entsprechenden Stelle auf dem Glaskörper der tiefste oder je nach der gewünschten Wirkung der geringste bzw. gar kein Eingriff erfolgt.

Nichtlinearitäten der Gravur- bzw. Schleifeinrichtung bzw. der zur Betätigung derselben eingesetzten Mechanik werden vorteilhaft elektronisch kompensiert.

Einrichtungsmäßig wird die erfindungsgemäße Aufgabe durch ein Abtastgerät zur optisch-elektrischen Abtastung einer Vorlage und Abgabe davon abhängiger elektrischer Signale, einer Rechner- und/oder Speichereinheit zur Verarbeitung der elektrischen Signale und eine Gravur- bzw. Schleifmaschine zur Durchführung der Gravur bzw. des Schliffes in Abhängigkeit von den elektrischen Signalen der Rechner- und/oder Speichereinheit gelöst.

Eine vorteilhafte Ausgestaltung der Einrichtung ergibt sich durch
- einen Koordinatentisch zur Bewegung der Vorlage und des Abtastgerätes relativ zueinander,
- ein Abtastgerät, das entweder aus einer im Brennpunkt eines Parabolspiegels angeordneten Lichtquelle, einem in dem von dem Parabolspiegel reflektierten, parallelen Strahlenbündel um 45° geneigt angeordneten, halbdurchlässigen Spiegel, einer zwischen dem halbdurchlässigen Spiegel und der Vorlage im Abstand der Brennweite von dieser angeordneten Sammellinse und einer Fotozelle, die von der Sammellinse aus betrachtet hinter dem halbdurchlässigen Spiegel angeordnet

4

ist, oder aus einer elektronischen Kamera besteht,

- eine elektronische Rechner- und/oder Speichereinheit zur Verarbeitung der elektrischen Signale des Abtastgerätes, in Verbindung mit einer elektronischen Kamera zur verlangsamten Abgabe der von der Kamera aufgenommenen Information an die Gravur- bzw. Schleifeinrichtung, zur Korrektur von Nichtlinearitäten der mechanischen Teile der Gravur- bzw. Schleifeinrichtung und zur Anpassung an beliebig geformte Glaskörper,

- einen Linearmotor zur Umwandlung der elektrischen Signale der Rechner- und/oder Speichereinheit in eine mechanische Bewegung,

- mechanische Mittel zur Übertragung der mechanischen Bewegung auf ein Gravur- bzw. Schleifwerkzeug,

- ein Gravur- bzw. Schleifwerkzeug, das aus einem an einem Festpunkt in einer Ebene schwenkbar angelenkten Arm und einer an diesem befestigten Diamantspitze und/oder einer Schleifscheibe besteht und

- eine Vorrichtung zur Halterung und Bewegung des Glaskörpers relativ zu dem Gravur- bzw. Schleifwerkzeug.

Der Linearmotor kann ein gegen eine Feder arbeitender Elektromagnet sein.

Als mechanisches Mittel zur Übertragung der Bewegung auf das Gravur- bzw. Schleifwerkzeug dient vorteilhaft ein Kniehebel.

Zur Durchführung eines Schliffes weist die Einrichtung vorteilhaft einen kugelförmigen oder konischen Schleifkopf auf.

Zusammenfassend kann gesagt werden, daß die eigentliche Gravur vorteilhaft dadurch erfolgt, daß die Gravurmaschine zum Einsatz auf einem Flächenraster eine Diamantspitze in Pyramidenform und/oder eine Schleifscheibe mit einem geringen Durchmesser aufweist, die in Abhängigkeit von den elektrischen Steuersignalen der Rechner und/oder Speichereinheit innerhalb der zu gravierenden   ... s. A. 9

Besonders vorteilhaft ist es, daß durch die erfindungsgemäße Lösung nicht nur die maschinelle Gravur möglich wird, sondern daß weiterhin durch die Ausschaltung der Fehler bei manueller Bearbeitung und durch die maschinell mögliche einstellbare Gleichmäßigkeit der einzelnen Eingriffspunkte eine gegenüber dem Herkömmlichen unerreicht gute Gravur wirtschaftlich erreichbar ist. Es ist dabei zu berücksichtigen, daß die genannte Gravur durch "Hämmern" oder "Stippen" mangels geeigneten Fachpersonals und mangels Kenntnisse dieser Verfahren zur Zeit gar nicht durchgeführt werden kann.

Im folgenden wird ein Ausführungsbeispiel der Erfindung anhand von Zeichnungen näher beschrieben. Es zeigen:

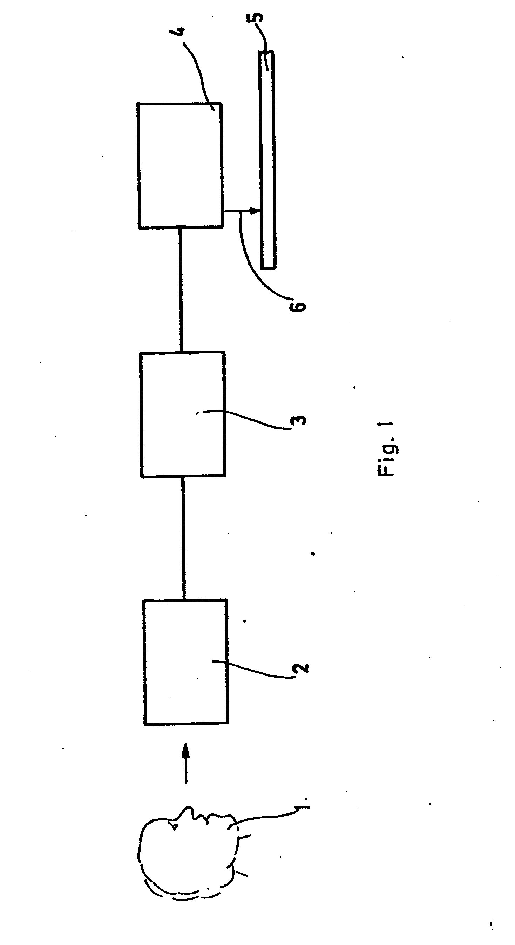

Figur 1 das Blockschaltbild der erfindungsgemäßen Einrichtung,

Figur 2 eine erfindungsgemäße Einrichtung zur Oberflächengravur und zum Schliff von Glaskörpern und

Figur 3 eine Einrichtung gemäß Figur 2 mit einer elektronischen Kamera als Abtastgerät.

Gemäß den Figuren besteht die Einrichtung aus einem Abtastgerät 2, welches ein Bild oder eine sonstige Vorlage 1 optisch-elektronisch abtastet und die Signale in elektrische Signale umwandelt, die in einer Rechner- und/oder Speichereinheit 3 verarbeitet werden. Weitere elektrische Signale der Einheit 3 steuern eine Gravurmaschine 4, welche mechanisch die Gravur des Glasgegenstandes 5 vornimmt.

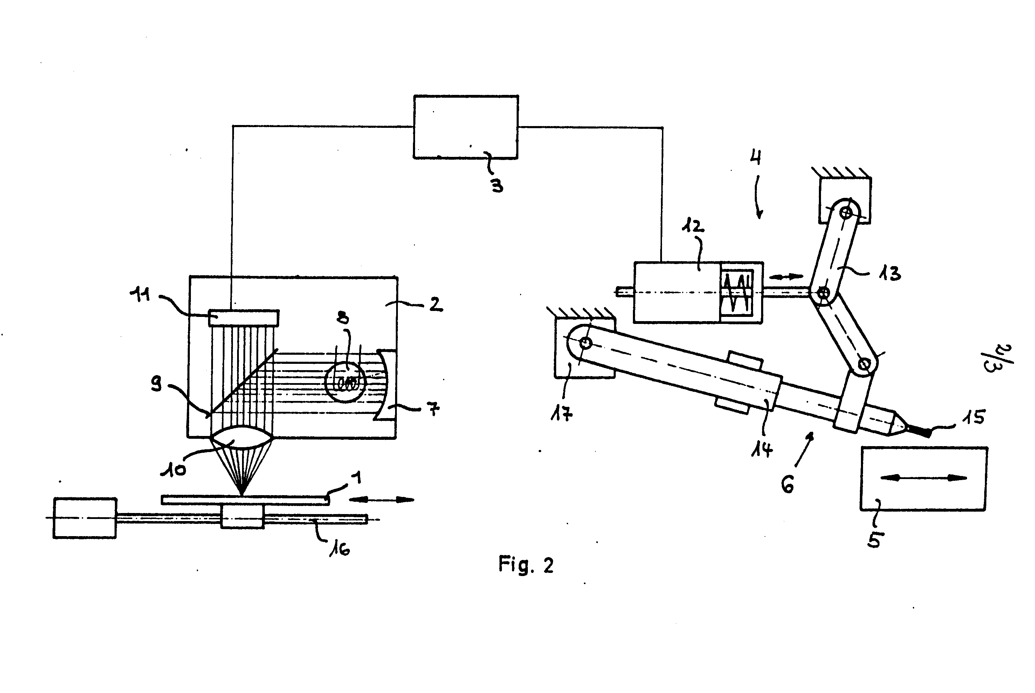

Das Abtastgerät 2 besteht gemäß Figur 2 aus einer im Brennpunkt eines Parabolspiegels 7 angeordneten Lichtquelle 8, einem in dem von dem Parabolspiegel 7 reflektierten, parallelen Strahlenbündel um 45° geneigt angeordneten, halbdurchlässigen Spiegel 9, einer zwischen dem halbdurchlässigen Spiegel 9 und der Vorlage 1 im Abstand von dieser angeordneten Sammellinse 10 und einer Fotozelle 11, die von der Sammellinse 10 aus betrachtet hinter dem halbdurchlässigen Spiegel 9 angeordnet ist. Die Vorlage 1 ist auf einem Koordinatentisch 16 angeordnet, der eine zweidimensionale Bewegung der Vorlage 1 gegenüber dem Abtastgerät 2 ermöglicht. Für den Fachmann selbstverständlich kann auch die Vorlage 1 festliegen und das Abtastgerät entsprechend bewegt werden.

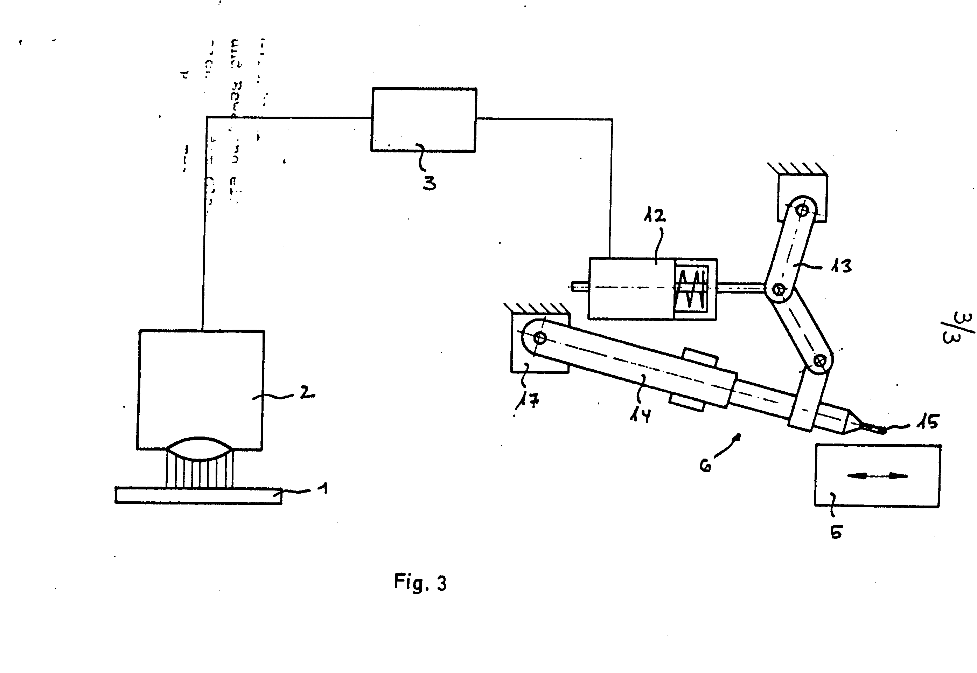

Gemäß Figur 3 kann das Abtastgerät 2 auch aus einer elektronischen Kamera bestehen, die von sich aus eine zeilenweise Abtastung der Vorlage 1 ermöglicht. In diesem Falle entfällt der Koordinatentisch 16.

Die Rechner- und/oder Speichereinheit, deren Aufbau jedem Computer-Fachmann geläufig ist und die daher nicht näher beschrieben zu werden braucht, da sie weiterhin auch nicht Gegenstand der Erfindung ist, vermag die elektrischen Signale des Abtastgerätes auszuwerten und in elektrische Signale umzuwandeln, welche die Gravurmaschine 4 in geeigneter Weise steuern. Durch elektronische Mittel kann dabei eine Vergrößerung oder Verkleinerung des abgetasteten Bildes im Verhältnis zu seiner Wiedergabe erfolgen, und weiterhin kann die Summe der elektrischen Signale gespeichert und abgerufen werden, so daß das abgetastete Bild beliebig oft wiederholbar ist und so eine automatische Massenfertigung möglich wird. Die Rechner- und/oder Speichereinheit kann weiterhin ebenfalls durch elektronische Maßnahmen berücksichtigen, ob der zu gravierende Glasgegenstand eben, gewölbt oder sphärisch ist, d. h. alle möglichen Wölbungsarten vom einfachen Zylinder über sphärisch gewölbte Trinkgläser können ohne Verzerrung mit dem gewünschten Bild graviert werden. Die elektronische Rechner- und/oder Speichereinheit 3 dient weiterhin zur Korrektur von Nichtlinearitäten der mechanischen Teile der Gravur- bzw. Schleifeinrichtung und in Verbindung mit einer elektronischen Kamera zur verlangsamten Abgabe der von der Kamera aufgenommenen Information an die Gravur- bzw. Schleifeinrichtung.

Die elektrischen Signale der Einheit 3 werden an einen Linearmotor 12 abgegeben, der aus einem gegen eine Feder arbeitenden Elektromagneten besteht. Der Linearmotor 12 setzt die elektrischen Signale in eine mechanische Bewegung um, die über einen Kniehebel 13 auf ein Gravur- bzw. Schleifwerkzeug 6 übertragen wird, das aus einem an einem Festpunkt 17 in einer Ebene schwenkbar angelenkten Arm 14 und einer an diesem befestigten Diamantspitze und/oder einer Schleifscheibe 15 besteht. Unterhalb dieser Diamantspitze und/oder Schleifscheibe 15 ist der Glaskörper 5 in einer Vorrichtung zur Halterung und Bewegung relativ zu dem Gravur- bzw. Schleifwerkzeug 6 angeordnet. Handelt es sich bei dem Glaskörper 5 um ein Flachglas, so kann zur Halterung und Bewegung ein Koordinatentisch dienen. Falls es sich bei dem Glaskörper 5 um einen Hohlglaskörper, z. B. ein Trinkglas, handelt, so muß die Vorrichtung zur Halterung und Bewegung so gestaltet sein, daß sie eine Drehung des Glaskörpers 5 um seine Längsachse gestattet.

Das erfindungsgemäße Verfahren wird folgendermaßen durchgeführt:

8

Die Abtastvorrichtung 2 tastet die Vorlage zeilenweise oder auch kreisförmig ab und gibt den Helligkeitswerten der Vorlage 1 entsprechende elektrische Signale an die Rechner- und/oder Speichereinheit 3 ab. Von dieser werden die Signale verarbeitet und in geeigneter Form an den Linearmotor 12 abgegeben, der das Gravur- bzw. Schleifwerkzeug 6 entsprechend der Vorlage 1 mit dem Glaskörper 5 in Eingriff bringt. Das Gravur- bzw. Schleifwerkzeug 6 kann entsprechend der Abtastung entweder auf nebeneinander liegenden, parallelen Bahnen oder auf konzentrischen, kreisförmigen Bahnen bewegt werden, wobei gewährleistet sein muß, daß das gesamte Linienfeld der zu gravierenden Fläche entspricht. Während der Bewegung auf den einzelnen Bahnen wird jetzt durch die Rechner- und/oder Speichereinheit gesteuert das eigentliche Gravieren bzw. der Schliff vorgenommen, indem entweder tief, dicht oder weniger tief bzw. weniger dicht graviert wird. Durch die Dichte und insbesondere die Tiefe der Gravur, die entweder durch die genannte Schleifscheibe oder durch eine Gravierpyramide bzw. Diamantspitze erzeugt wird, ist das Maß für das Entstehen des Feldes gegeben, wobei besonders tiefe und dichte Gravurpunkte die Fläche dunkel erscheinen lassen, während weniger tiefe und weniger dichte Punkte die Fläche hell erscheinen lassen.

Wesen der Erfindung ist es also, nach Abtastung der Bildfläche mittels eines optisch-elektrischen Gerätes, die optischen Signale in elektrische zu übersetzen, diese elektrischen Signale geeignet zu verarbeiten und mittels dieser Signale die eigentliche Gravur- bzw. Schleifmaschine zu steuern. Sowohl die Abtastung als auch die Bearbeitung der zu gravierenden Fläche erfolgt dabei dadurch, daß alle Bild- oder Arbeitsfeldpunkte nacheinander angesteuert werden und dabei die entsprechenden Gravuren vorgenommen werden.

Das erfindungsgemäße Verfahren und die Einrichtung zu seiner Durchführung gestatten nicht nur rein maschinell die Übertragung beliebiger Ornamente oder Bilder, sondern darüber hinaus die Übertragung aller Bilder oder Vorlagen unter beliebiger Verkleinerung oder Vergrößerung auch auf gekrümmte Oberflächen. Sie sind wirtschaftlich und zum Einsatz in der Massenfertigung durch Automaten geeignet. Es kann daher von einer hervorragenden Lösung der anstehenden Probleme gesprochen werden.

A 1

Patentansprüche:

1. Verfahren zur Oberflächengravur und zum Schliff von Glaskörpern, wobei auf der Oberfläche durch verschiedene Gravur- bzw. Schliffarten die hellen bzw. dunklen Felder eines Bildes oder entsprechende Vertiefungen nach einer Vorlage erzeugt werden, dadurch gekennzeichnet, daß die Vorlage optisch abgetastet wird, die Hell-Dunkel-Signale in elektrische Signale umgewandelt werden und diese auf eine Gravur- bzw. Schleifeinrichtung übertragen werden, die je nach Signal eine Gravur bzw. einen Schliff vornimmt, die durch unterschiedliche Tiefe des Eingriffs hell oder dunkel erscheinen.

2. Verfahren nach Anspruch 1, dadurch gekennzeichnet, daß die Gravur durch "Hämmern" oder "Stippen" mit Diamantspitzen unter Steuerung der Häufigkeit der Eingriffspunkte je Flächeneinheit bzw. durch Schleifen mittels Diamantschleifscheiben vorgenommen wird.

3. Verfahren nach Anspruch 1 oder 2, dadurch gekennzeichnet, daß die optische Abtastung zeilenweise erfolgt und daß beim Vorrücken der Abtastvorrichtung um eine Zeile der Glaskörper um einen durch das Größenverhältnis zwischen Vorlage und Gravur bzw. Schliff bestimmten Betrag verschoben bzw. gedreht wird.

4. Verfahren nach Anspruch 1 bis 3, gekennzeichnet durch eine Speicherung der elektrischen Signale zur wiederholten Abgabe an eine Gravur- oder Schleifmaschine.

5. Verfahren nach Anspruch 1 bis 4, dadurch gekennzeichnet, daß das Größenverhältnis zwischen Vorlage und Gravur bzw. Schliff über die Relativgeschwindigkeit zwischen Gravur- bzw. Schleifmaschine und dem Glaskörper steuerbar ist.

A 2

6. Verfahren nach Anspruch 1 bis 5, dadurch gekennzeichnet, daß die Stelle der Vorlage mit der größten Farbintensität als Referenzwert dient, das heißt, an der entsprechenden Stelle auf dem Glaskörper der tiefste oder je nach der gewünschten Wirkung der geringste bzw. gar kein Eingriff erfolgt.

7. Verfahren nach Anspruch 1 bis 6, dadurch gekennzeichnet, daß Nichtlinearitäten der Gravur- bzw. Schleifeinrichtung bzw. der zur Betätigung derselben eingesetzten Mechanik elektronisch kompensiert werden.

8. Einrichtung zur Durchführung des Verfahrens nach Anspruch 1 bis 7, gekennzeichnet durch ein Abtastgerät (2) zur optisch-elektrischen Abtastung einer Vorlage (1) und Abgabe davon abhängiger elektrischer Signale, eine Rechner- und/oder Speichereinheit (3) zur Verarbeitung der elektrischen Signale und eine Gravur- bzw. Schleifmaschine (4) zur Durchführung der Gravur bzw. des Schliffes in Abhängigkeit von den elektrischen Signalen der Rechner- und/oder Speichereinheit (3).

9. Einrichtung nach Anspruch 8, dadurch gekennzeichnet, daß die Gravurmaschine zum Einsatz auf einem Flächenraster eine Diamantspitze in Pyramidenform und/oder eine Schleifscheibe mit einem geringen Durchmesser aufweist, die in Abhängigkeit von den elektrischen Steuersignalen der Rechner- und/oder Speichereinheit innerhalb der zu gravierenden Fläche mit der Oberfläche des Glasgegenstandes in Eingriff gebracht werden.

10. Einrichtung nach Anspruch 8 und 9, gekennzeichnet durch

- einen Koordinatentisch (16) zur Bewegung der

A 3

Vorlage (1) und des Abtastgerätes (2) relativ zueinander,

- ein Abtastgerät (2), das entweder aus einer im Brennpunkt eines Parabolspiegels (7) angeordneten Lichtquelle (8), einem in dem von dem Parabolspiegel (7) reflektierten, parallelen Strahlenbündel um $45^o$ geneigt angeordneten, halbdurchlässigen Spiegel (9), einer zwischen dem halbdurchlässigen Spiegel (9) und der Vorlage (1) im Abstand der Brennweite von dieser angeordneten Sammellinse (10) und einer Fotozelle (11), die von der Sammellinse (10) aus betrachtet hinter dem halbdurchlässigen Spiegel (9) angeordnet ist, oder aus einer elektronischen Kamera besteht,

- eine elektronische Rechner- und/oder Speichereinheit (3) zur Verarbeitung der elektrischen Signale des Abtastgerätes (2), in Verbindung mit einer elektronischen Kamera zur verlangsamten Abgabe der von der Kamera aufgenommenen Information an die Gravur- bzw. Schleifeinrichtung (4), zur Korrektur von Nichtlinearitäten der mechanischen Teile der Gravur- bzw. Schleifeinrichtung und zur Anpassung an beliebig geformte Glaskörper (5),

- einen Linearmotor (12) zur Umwandlung der elektrischen Signale der Rechner- und/oder Speichereinheit (3) in eine mechanische Bewegung,

- mechanische Mittel (13) zur Übertragung der mechanischen Bewegung auf ein Gravur- bzw. Schleifwerkzeug (6),

- ein Gravur- bzw. Schleifwerkzeug (6), das aus einem an einem Festpunkt (17) in einer Ebene schwenkbar angelenkten Arm (14) und einer an diesem befestigten Diamantspitze und/oder einer Schleifscheibe (15) besteht und

- eine Vorrichtung zur Halterung und Bewegung des Glaskörpers (5) relativ zu dem Gravur- bzw. Schleifwerkzeug (6).

A 4

11. Einrichtung nach Anspruch 10, dadurch gekennzeichnet, daß der Linearmotor (12) ein gegen eine Feder arbeitender Elektromagnet ist.

12. Einrichtung nach Anspruch 10, dadurch gekennzeichnet, daß als mechanisches Mittel (13) zur Übertragung der Bewegung auf das Gravur- bzw. Schleifwerkzeug (6) ein Kniehebel dient.

13. Einrichtung nach Anspruch 10, gekennzeichnet durch einen kugelförmigen oder konischen Schleifkopf.

Fig. 1

Fig. 2

Fig. 3

| | | Europäisches Patentamt | **EUROPÄISCHER RECHERCHENBERICHT** | Nummer der Anmeldung<br>EP 79 20 0339 |
|---|---|---|---|---|

| **EINSCHLÄGIGE DOKUMENTE** | | | | **KLASSIFIKATION DER ANMELDUNG (Int.Cl. ³)** |
|---|---|---|---|---|
| Kategorie | Kennzeichnung des Dokuments mit Angabe, soweit erforderlich, der maßgeblichen Teile | | betrifft Anspruch | B 41 C 1/04 |
| X | FR - A - 997 932 (P. NOUEL) F. BUSSIERE)<br><br>* Seite 1, linke Spalte, Zeilen 1-8,22-31; Zeile 32 bis rechte Spalte, Zeile 13; Zeile 18 bis Seite 2, rechte Spalte, Zeile 3; Figuren * | | 1,3,6-13 | |
| | -- | | | |
| X | FR - A - 840 115 (T.F. GYGAX)<br><br>* Seite 1, Zeile 50 bis Seite 2, Zeile 3; Figuren 1,2 * | | 1,2,11 12 | **RECHERCHIERTE SACHGEBIETE (Int. Cl. ³)** |
| | -- | | | B 44 C 1/22<br>B 44 B 3/00<br>G 03 F 1/02<br>7/18<br>7/24<br>B 23 Q 35/128<br>B 41 C 1/04 |
| X | FR - A - 875 853 (ETABLISSEMENTS EDOUARD BELIN)<br><br>* Seite 2, Zeile 6 bis Seite 3, Zeile 16; Seite 7, Zeilen 25-40; Figuren 1-3 * | | 1,3,7-11 | |
| | -- | | | |
| X | FR - A - 812 142 (M. NEUGROSCHL)<br><br>* Seite 1, Zeilen 9-22, Zeile 32 bis Seite 2, Zeile 58; Seite 2, Zeile 80 bis Seite 3, Zeile 35; Seite 3, Zeile 86 bis Seite 4, Zeile 5; Figuren 1-3 * | | 1,3,5, 10-12 | |
| | -- | | | **KATEGORIE DER GENANNTEN DOKUMENTE** |
| X | CH - A - 308 003 (ELGRAMA AG)<br><br>* Seite 1, Zeilen 30-38; Seite 5, Zeile 90 bis Seite 6, Zeile 2; Seite 1, Zeile 65 bis Seite 4, Zeile 11; Figuren 1,4 * | | 1,3,5, 10 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | -- | | | |
| | GB - A - 1 246 895 (VSESO VZNY) | | 4,8 | |
| | | ./. | | &: Mitglied der gleichen Patentfamilie, übereinstimmendes Dokument |

| | Der vorliegende Recherchenbericht wurde für alle Patentansprüche erstellt. | | |
|---|---|---|---|
| Recherchenort<br>Den Haag | Abschlußdatum der Recherche<br>17-10-1979 | Prüfer<br>CORNILLIE | |

EPA form 1503.1  06.78

| | EUROPÄISCHER RECHERCHENBERICHT | | |
|---|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | * Seite 3, Zeilen 82-104; Figuren * | |
| | -- | |
| | US - A - 2 415 450 (S.D. SWANN) <br> * Spalte 1, Zeilen 33-40; Spalte 2, Zeilen 1-16; Zeile 42 bis Spalte 5, Zeile 38; Figuren 1,2 * | 3,5,6, 10 |
| | -- | |
| | US - A - 2 149 487 (M.C. ZILBERMAN L.V. THUNBERG, L.V. SKINNER) <br> * Seite 1, rechte Spalte, Zeile 20 bis Seite 3, rechte Spalte, Zeile 54; Figuren 1-5 * | 1,9,10 |
| | -- | |
| | US - A - 2 331 770 (A.S. GANO, PRESS ASSOCIATION INC.) <br> * Seite 1, linke Spalte, Zeilen 4-14; Seite 2, linke Spalte, Zeile 50 bis Seite 3, linke Spalte, Zeile 60; Figuren 1-5 * | 7 |
| | -- | |
| | DE - A - 1 926 992 (GROPACK ZUG GmbH) <br> * Seite 3, Zeile 4 bis Seite 4; Figur 2 * | 12 |
| | -- | |
| | US - A - 288 246 (S.M. FAIRCHILD FAIRCHILD CAMERA AND INSTRUMENT CORP.) <br> * Spalte 3, Zeile 60 bis Spalte 4, Zeile 13; Spalte 5, Zeilen 66, 67; Figur 3c * | 13 |
| | -- | |
| | ./. | |

KLASSIFIKATION DER
ANMELDUNG (Int.Cl. 3)

RECHERCHIERTE
SACHGEBIETE (Int. Cl. 3)

Europäisches
Patentamt

| | **EINSCHLÄGIGE DOKUMENTE** | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | US – A – 3 827 334 (M.H. ENGLISH et al.) <br><br> * Zusammenfassung; Figur 1; Spalte 6, Zeilen 23-46 * <br><br> –– | 8-10 | |
| PA | NL – A – 77 06425 (P. SCHOTKAMP) <br> * Seite 1, Zeilen 8-17 * <br><br> –––– | 1 | |
| | | | **RECHERCHIERTE SACHGEBIETE (Int. Cl. ³)** |